# EUROPÄISCHE PATENTSCHRIFT

(11) **EP 2 146 816 B1**
(45) Veröffentlichungstag und Bekanntmachung des Hinweises auf die Patenterteilung: **29.02.2012**
(21) Anmeldenummer: 08758001.5
(22) Anmeldetag: 30.04.2008
(51) Int. Cl.: B23D 77/00

(54) **DREHANTREIBBARES SPANABHEBENDES WERKZEUG**
ROTATABLY DRIVABLE CUTTING TOOL
OUTIL D'ENLÈVEMENT DE COPEAUX POUVANT ÊTRE ENTRAÎNÉ EN ROTATION

(30) Priorität: 20.05.2007 DE 102007023168
(43) Veröffentlichungstag der Anmeldung: 27.01.2010
(60) Teilanmeldung: 11183968.4
(73) Patentinhaber: Gühring OHG, 72458 Albstadt (DE)
(72) Erfinder: KLEINER, Gilbert, 72514 Inzigkofen (DE); SCHANZ, Gerhard, 72393 Burladingen (DE)
(74) Vertreter: Meitinger, Thomas Heinz
(86) Internationale Anmeldenummer: PCT/DE2008/000740
(87) Internationale Veröffentlichungsnummer: WO 2008/141606

(56) Entgegenhaltungen:
- WO-A-92/03245
- DE-A1- 4 200 808
- DE-U- 7 329 780
- DE-U1- 20 300 520
- US-A- 5 839 897

## Beschreibung

Die Erfindung betrifft ein drehantreibbares spanabhebendes Werkzeug, insbesondere ein Feinbearbeitungswerkzeug wie zum Beispiel eine Reibahle, gemäß dem Oberbegriff des Patentanspruchs 1, und ein Verfahren zur Versorgung der Schneiden eines solchen Werkzeugs mit Kühl-/Schmiermittel (Anspruch 12).

Derartige Werkzeuge müssen unterschiedlichsten Anforderungen genügen. Zum einen wird von solchen Werkzeugen eine immer höhere Bearbeitungsgenauigkeit gefordert, was eine hohe Maßhaltigkeit der Schneidenpositionierung und eine hohe Stabilität bei der dynamischen Beanspruchung der Schneiden und des Schaftes voraussetzt. Zum anderen wird von derartigen Werkzeugen eine immer höhere Standzeit verlangt, weshalb in derartige Werkzeuge regelmäßig eine Kühl-/Schmiermittelversorgung integriert wird. Diese in das Werkzeug integrierte Kühl-/Schmiermittelversorgung soll dabei sicherstellen, dass die am höchsten beanspruchten Bereiche des Werkzeugs im Einsatz zu jedem Zeitpunkt eine ausreichende Versorgung mit Kühl-/Schmiermittel erhalten.

Es gibt im Stand der Technik verschiedene Ansätze der Gestaltung gattungsbildender Werkzeuge mit integrierter Kühl-/Schmiermittelversorgung.

In Dokument DE 10347755 A1 ist ein gattungsbildendes Werkzeug in der Ausgestaltung als Hochleistungsreibahle gezeigt, bei der ein mit einem Schaftteil dreh- und axialfest verbundener Schneidkopf, der aus einem Hartstoff, wie zum Beispiel einem Sinteniverkstoff hergestellt sein kann über einen zentralen Kühl/Schmiermittelversorgungskanal im Werkzeugschaft und ein Radialkanalsystem im bzw. an der Schnittstelle zum Schneidkopf mit Kühl-/Schmiermittel versorgt wird. Die radial außen liegenden Mündungsöffnungen des Radialkanalsystems sind von einer Kühlmittel-Leithülse abgedeckt, die sich in Richtung der Werkzeugspitze bis in einen Auslaufbereich der Spannuten erstreckt und somit dafür sorgen kann, dass das zugeführte Kühl-/Schmiermittel mit möglichst geringen Verlusten in die Spannuten eingespeist werden kann.

Diese bekannte in das Schaftwerkzeug integrierte Kühl-/Schmiermittelversorgung eignet sich auch für die sogenannte MMS (Minimalmengenschmierung) -Technologie, gemäß der das Kühl-/Schmiermittel - im Gegensatz zur sogenannten "Nassbearbeitung" - in extrem geringer Konzentration in einer Druckluftströmung zu den Schneiden geführt wird. Das Schmiermedium wird also während der Bearbeitung als Aerosol den Schneiden zugeführt, mit dem Ziel, in unmittelbarer Nähe der Schneidkanten einen ausreichenden Schmierfilm zu erzeugen.

Bei der MMS-Technologie kommt es allerdings darauf an, das Schmiermittel in genauer Dosierung und in möglichst gleichbleibender Konzentration an die Schneiden zu leiten. Um diese Aufgabe bei gleichzeitiger Verringerung des herstellungstechnischen Aufwandes für die Herstellung des Werkzeugs zu lösen, wird im Dokument DE 202004008566 U1 eine Hochleistungsreibahle beschrieben, bei der sich eine Hülse am Einspannabschnitt bis zum Nutenauslaufbereich des Werkzeugs erstreckt, wobei die Hülse einstückig mit dem Einspannabschnitt ausgebildet ist und im Inneren zur Ausbildung axialer Kühl-/Schmiennittelkanäle den Reibahlenschaft aufnimmt. Die sich axial erstreckenden Schmiermittelkanäle werden von einem zentralen Schmiermittelkanal im Einspannabschnitt derart versorgt, dass der Kühlkanal vom Schaftende bis zum Nutenauslaufbereich einen konstanten Querschnitt erhält.

In beiden bekannten Fällen lässt sich die Kühl-/Schmiermittelversorgung der Schneiden nur durch einen entsprechend grossen Aufwand bei der Herstellung des Werkzeugs erzielen. Darüber hinaus müssen die bekannten Werkzeuge aus verschiedenen Komponenten zusammengestellt werden.

Aus DE 73 29 780 U ist ein zylindrischer Werkzeugschaft für spanabhebende Werkzeuge, insbesondere Bohrer und Senker; bekannt bei dem der Werkzeugschaft drei flache Phasen als Stützflächen für die Backen eins Dreibackenfutters aufweist. Diese Phasen dienen ausschließlich dazu, die Einspannung des Werkzeugschaftes zu verbessern.

Ferner ist aus US 5 839 897 A ein Bohrer für eine Einfügung eines Dentalimplantates bekannt, der in einem Teil des Schaftes eine zentrale Bohrung zur Aufnahme einer als Schmierung dienenden Flüssigkeit aufweist.

Der Erfindung liegt deshalb die Aufgabe zugrunde, ein drehantreibbares spanabhebendes Werkzeug der eingangs beschriebenen Art zu schaffen, das die heutzutage geforderte Standzeit der Schneiden bei einem vereinfachten Aufbau des Werkzeugs sicherstellt. Eine weitere Aufgabe besteht darin, ein neues Verfahren zu schaffen, mit dem Kühl-/Schmiermittel sowohl bei der Nassauch bei der Trockenbearbeitung (MMS-Technologie) mit geringem Aufwand, jedoch prozesssicher und in ausreichender Mange an hochbelastete Schneiden eines gattungsbildenden Werkzeugs herangebracht werden kann.

Diese Aufgabe wird hinsichtlich des Werkzeugs durch die Merkmale des Patentanspruchs 1 und hinsichtlich des Verfahrens durch die Merkmale des Anspruchs 12 gelöst.

Erfindungsgemäss werden in den Einspannabschnitt des Werkzeugs Kühl/Schmiermittelkanäle derart integriert, dass das aus diesen Kühl/Schmiermittelkanälen axial austretende Kühl-/Schmiermittel auf der Aussenseite des zum Schneidteil führenden Schafts, ansonsten jedoch frei fliegend in jeweils eine Spannut des Schneidteils eingespeist wird. Es wurde durch Versuche herausgefunden, dass mit dieser Gestaltung der Werkzeuge sowohl bei der sogenannten Nassbearbeitung, d.h. bei Verwendung von flüssigen Kühl/Schmiermitteln, als auch bei der sogenannten "Trockenbearbeitung" gemäß der MMS-Technologie, im Bereich der Spannuten und auch an den für die Standzeit entscheidenden Flächen der Werkzeugschneiden eine ausreichende Schmiermittelversorgung selbst dann stabilisiert werden kann, wenn der Arbeitsdruck des Kühl-/Schmiermittels auf einem leicht beherrschbaren Niveau von beispielsweise über 5 bar, vorzugsweise über 10 bar gehalten wird.

Untersuchungen der Kühl-/Schmiermittelströmung entlang der Werkzeugachse, d.h. vom Einspannabschnitt bis zur Werkzeugspitze haben gezeigt, dass der aus den Kühl-/Schmiermittelkanälen austretende Fluidstrahl selbst dann, wenn er unter ' Einwirkung der auftretenden Zentrifugalkräfte eine beträchtliche axiale Länge in Richtung Schneidkopf erfindungsgemäß ohne radial außenliegende Begrenzung zurücklegen muss, einen ausreichend großen Kernbereich mit hoher Strömungsgeschwindigkeit in dem Moment besitzt, in dem das Werkzeug in die zu bearbeitende Bohrung, insbesondere in die Durchgangsbohrung eintaucht, die einer Fein-Nachbearbeitung unterzogen werden soll. Mit zunehmender Eingriffslänge der Werkzeugschneiden in der Durchgangsbohrung bildet sich sogar ein immer stabiler werdendes Strömungsprofil in den einzelnen von den Spannuten und der Bohrungswandung definierten Strömungskanälen aus. Dadurch wird sichergestellt, dass die Werkzeugschneiden insbesondere in den Bereichen, in denen es besonders wichtig ist, mit ausreichenden Mengen an Kühl-/Schmierstoff versorgt werden. Weil sich die Strömung in diesen Strömungskanälen mit zunehmendem Abstand von der Werkstückoberfläche immer besser ausgeprägt, wird auch die verhältnismäßig hoch belastete Werkzeugschneide nahe der Werkzeugspitze wirksam gekühlt bzw. geschmiert, wodurch es gelingt, die Standzeit des Werkzeugs auf hohem Niveau zu halten.

Dabei ergibt sich durch die erfindungsgemäßen Maßnahmen der zusätzliche Vorteil, dass die Kühl-/Schmiermittelstrahlen, die aus den stirnseitigen Austrittsöffnungen im Einspannabschnitt.austreten, besonders wirksam zum Abtransport der Späne in Vorschubrichtung des Werkzeugs herangezogen werden können. Dies eröffnet die Möglichkeit, Hochleistungs-Feinbearbeitungswerkzeuge, wie zum Beispiel Hochleistungs-Reibahlen mit der vorstehend angesprochenen integrierten Kühl-/Schmiermittelversorgung auszustatten.

Derartige Hochleistungs-Reibahlen werden mit beträchtlichen Schnittgeschwindigkeiten betrieben. Es hat sich aber gezeigt, dass die aus den axialen Austrittsöffnungen austretenden Einzelstrahlen selbst bei verhältnismäßig kleinen Strömungsmitteldrücken in der Größenordnung von etwa 5 bis 10 bar, d.h. von Strömungsmitteldrücken, die sich ohne weiteres im Bereich von Arbeitsdrücken herkömmlicher Kühl-/Schmiermittelversorgungseinheiten bewegen, ausreichend stabil sind, um den vorstehend beschriebenen Effekt der prozesssicheren Auffüllung der von den Spannuten des im Eingriff befindlichen Schneidteils begrenzten Strömungskanäle zu bewirken, und zwar selbst bei erheblichen, auf die Fluidstrahlen einwirkenden Zentrifugalkräften. Insgesamt ergibt sich also durch das erfindungsgemäße Konzept der Werkzeuggestaltung der Vorteil, dass durch die außenliegende Zuführung des Kühl-/Schmiermittels die absolute Kühl-/Schmiermittelmenge in den Spannuten erheblich angehoben werden kann.

Die Zufuhr von Kühl-/Schmiermittel an die für das Werkzeug entscheidenden Stellen ist verlustarm, da Umlenkungen der Kühl-/Schmiermittelströmung vermieden sind. Damit eignet sich das erfindungsgemäße Konzept nicht nur für die Nassbearbeitung, sondern auch für die sogenannte Trockenbearbeitung bzw. für die Mindermengenschmierung (MMS-Technologie). Die durch die erfindungsgemäße Gestaltung erhöhte Strömungsgeschwindigkeit des Kühl-/Schmiermittels in den Spannuten bzw. im Spanraum in axialer Richtung kann dabei wirksam zum Späneabtransport genutzt werden.

Die erfindungsgemäße Integrierung der Kühl-/Schmiermittelversorgung in das Werkzeug eröffnet darüber hinaus die Möglichkeit, das Werkzeug einstückig und mit geringer Masse aufzubauen. Dies ergibt dann besondere Vorteile, wenn das Werkzeug zumindest im Bereich des Einspannabschnitts und des sich anschließenden Schaftes aus einem sinterfähigen Hartstoff, beispielsweise aus einem Vollhartmetall oder einem Cermet-Werkstoff besteht. Es lässt sich beispielsweise dann, wenn eine VHM-Reibahle mit einem Nenndurchmesser von 8mm hergestellt werden soll, bezüglich des Rohmaterials eine Materialersparnis von über 20% erzielen. Da die erfindungsgemäße Gestaltung der in das Werkzeug - integrierten Kühl-/Schmiermittelversorgung mit einem stark verringerten Volumen des Werkzeugs im Bereich des Schaftes und des Einspannabschnitts auskommt, ergibt sich der zusätzliche wirtschaftliche Vorteil eines verringerten Zeitspanvolumens bei der Herstellung des Werkzeugs. Es genügt beispielsweise, die Spannuten ausschließlich im Bereich des Schneidteils einzuschleifen. Im übrigen Bereich des Werkzeugs, d.h. im Bereich des Schafts und des Einspannabschnitts, kann ein spanabhebender Bearbeitungsvorgang vollständig entfallen. Die innenliegenden Kühl-/Schmiermittelkanäle im Einspannabschnitt und gegebenenfalls die außenliegenden Führungsrinnen im Schaft können bereits bei der Herstellung eines Sinterformrohlings weitgehend mit Endmaß geschaffen werden.

Hinsichtlich des Verfahrens wird die Aufgabe mit den Merkmalen des Patentanspruchs 16 gelöst. Es hat sich gezeigt, dass der vorstehend beschriebene erfindungsgemäße Aspekt einer ausreichenden Versorgung des Schneidteils an den entscheidenden Stellen mit Kühl-/Schmiermittel ohne weiteres schon dann sichergestellt werden kann, wenn das Kühl-/Schmiermittel unter einem - bislang gängigen - Druck von über 5 bar zugeführt wird. Durch Variation des Systemdrucks kann den Besonderheiten des jeweiligen Einsatzgebiets des Werkzeugs Rechnung getragen werden, indem zum Beispiel der Systemdruck mit zunehmender Länge des Werkzeugschafts und/oder mit zunehmender, auf die einzelnen Kühl-/Schmiermittelstrahlen einwirkender Fliehkraft entsprechend angehoben wird. Vorteilhafte Ausgestaltungen der Erfindung sind Gegenstand der Unteransprüche.

Vorzugsweise berühren die Kühl-/Schmiermittelkanäle im Einspannabschnitt jeweils den Außendurchmesser des Schafts, wodurch die einzelnen Kühl-/Schmiermittelstrahlen auf dem Weg zu den Spannuten soweit stabilisiert werden, dass der Kühl-/Schmiermitteldurchsatz im Bereich des Schneidteils und damit die eingangs beschriebenen Effekte der Schneidenkühlung und des Späne-Abtransports weiter gesteigert werden können.

Gleichzeitig ergibt sich dann, wenn der Kühl-/Schmiermittelkanal radial nach innen vergrößert und an den Außendurchmesser des Schafts herangeführt wird, eine weiter vergrößerte Materialersparnis für den Fall, dass das Werkzeug aus einem sinterfähigen Material, wie zum Beispiel aus Vollhartmetall oder einem Cermet-Werkstoff hergestellt wird.

Die im Einspannabschnitt ausgebildeten Kühl-/Schmiermittelkanäle können umfangsseitig radial nach außen offen sein. Die Kühl-/Schmiermittelkanäle werden dann im Bereich des Einspannabschnitts durch das Spannfutter geschlossen.

Um bei Verwirklichung großer Spannkräfte mehr Spielraum für die geometrische Gestaltung des Querschnitts der Kühl-/Schmiermittelkanäle im Einspannabschnitt zu erhalten, ist es von besonderem Vorteil, die Kühl-/Schmiermittelkanäle im Einspannabschnitt umseitig geschlossen zu gestalten. Diese innenliegenden Kanäle können bei Verwendung von Sinterwerkstoffen, wie zum Beispiel Vollhartmetall- oder Cermet-Werkstoffen bereits mit geringem herstellungstechnischen Aufwand mit großer Formgenauigkeit bereits in den Sinterrohling eingebracht, beispielsweise mit extrudiert werden. Es ergibt sich hierdurch eine weitere Materialersparnis beim Rohmaterial. Die Formgebung der Innenkanäle ist dabei ausreichend genau, um die eingangs beschriebenen Effekte der Kühl-/Schmiermittelversorgung zu erzielen, ohne die innenliegenden Kanäle einer Nachbearbeitung unterziehen zu müssen. Nebenbei ergibt sich eine verbesserte Stabilität des Werkzeugs, die Vorteile hinsichtlich einer verbesserten Schwingungsdämpfung und Drehmomentübertragung hat.

Eine besonders gute Versorgung der Schneiden mit Kühl-/Schmiermittel und ein besonders guter Abtransport der Späne auch dann, wenn diese in großen Mengen anfallen, wie es zum Beispiel bei Hochleistungs-Reibahlen der Fall ist, ergibt sich mit der Weiterbildung des Patentanspruchs 3. Die Spannuten eines gattungsbildenden Werkzeugs können eine verhältnismäßig komplexe Formbildung haben. Es lassen sich jedoch insbesondere dann, wenn die im Einspannabschnitt vorgesehenen Kühl-/Schmiermittelkanäle bereits im Urformprozess, wie zum Beispiel in einem Extrusionsprozess oder einem Formpressprozess eingebracht werden, derartige, kompliziertere Formgebungen des Kühlkanalabschnitts bereits im Sinterrohling mit guter Formgenauigkeit realisieren. Mit diesen Maßnahmen kann ein Maximum an Kühl-/Schmiermittel-Volumenstrom in einem solchen radialen Abstand von der Werkzeugachse bereitgestellt werden, dass im Eingriffsbereich des Werkzeugs in den Spannuten eine besonders kräftige und ausgeprägte Kühl-/Schmiermittelströmung aufgebaut und stabilisiert wird, wodurch die Leistungsfähigkeit des Werkzeugs weiter angehoben wird.

Die besten Ergebnisse lassen sich dann erzielen, wenn in einer axialen Projektion betrachtet der Querschnitt der Austrittsöffnung des jeweiligen innenliegenden Kühl-/Schmiermittelkanals im Einspannabschnitt die Spannut im Schneidteil vollständig abdeckt bzw. mit dieser zumindest deckungsgleich ist.

Vorzugsweise hat die jeweilige axiale Austrittsöffnung der Kühl-/Schmiermittelkanäle im Einspannabschnitt einen Querschnitt, der dem Querschnitt der zugehörigen Spannut angepasst ist.

Wenn in der axialen Projektion betrachtet eine vollständige Überlappung der Querschnitte der Austrittsöffnungen und der Spannuten nicht möglich ist, ist es vorteilhaft, den Querschnitt der axialen Austrittsöffnung hinsichtlich Lage und/oder Form der Geometrie der zugeordneten Spannut zumindest derart anzupassen, dass er in der axialen Projektion die jeweilige zur Schneidkante führende Flanke der Spannut erfasst bzw. dieser nahe kommt, vorzugsweise berührt.

Die eingangs beschriebenen Vorzüge des erfindungsgemäßen Werkzeugs stellen sich in maßgeblichem Umfang auch dann noch ein, wenn die Spannut um ein gewisses Maß bezüglich des Kühl-/Schmiermittelstrahls radial um ein gewisses Maß nach innen versetzt ist. Dies erlaubt es, Werkzeuge mit verschiedenen Nenn-Arbeitsdurchmessern aus ein und demselben Werkzeugrohling mit innenliegenden Kühl-/Schmiermittelkanälen im Einspannabschnitt herzustellen, indem der Einspannabschnitt und die Geometrie des Schaftes unverändert gehalten und lediglich im Bereich des Schneidteils eine unterschiedlich große spanabhebende Bearbeitung auf Endmaß des Nenn-Arbeitsdurchmessers und/oder der Spannuten vorgenommen wird.

Versuche haben gezeigt, dass dann, wenn die Spannut im Schneidteil-radial etwas nach innen zum Querschnitt des Kühl-/Schmiermittelstrahls versetzt ist, die Geometrie des Querschnitts der axialen Austrittsöffnung gemäß Anspruch 5 auf die Geometrie der Spannut abgestimmt sein sollte, damit sich im Eingriffsbereich des Werkzeugs in den Spannuten ein solches Geschwindigkeitsprofil einstellt, das in der Schneidenebene eine besonders gute Versorgung mit Schmiermittel sicherstellt.

Bei der Herstellung des Werkzeugs aus einem Hartstoff, wie zum Beispiel einem Sinterwerkstoff wie Hartmetall oder Cermet lassen sich die innenliegenden Kühl-/Schmiermittelkanäle schon im Rohling, d.h. im Urformprozess herstellen..

Der Querschnitt der axialen Austrittsöffnung sollte hinsichtlich Lage und/oder Form der Geometrie der zugeordneten Spannut derart angepasst sein, dass sich in der axialen Projektion eine möglichst große Überdeckung der betreffenden Querschnittsflächen ergibt. Je nach Anwendung kann jedoch der Spannabschnitt einen anderen Durchmesser aufweisen als das Schneidteil. Um in einem solchen Fall dennoch eine ausreichende Versorgung des Schneidteils an den entscheidenden Stellen mit Kühl-/Schmiermittel sicherzustellen, können die Kühl-/Schmiermittelkahäle im Einspannabschnitt unter einem Anstellwinkel zu einer zugeordneten Spannut des Schneidteils geführt sein. Auf diese Weise können durch die Veränderung des Anstellwinkels der Kühl-/Schmiermittelkanäle Schneidteile unterschiedlichster Größen mit Kühl-/Schmiermittel versorgt werden, ohne dabei den (Standard-)Durchmesser des Spannabschnitts des Werkzeugs verändern zu müssen.

Entscheidend für das erfindungsgemäße Konzept der ausreichenden Versorgung der Werkzeugschneiden mit Kühl-/Schmiermittel ist die Beaufschlagung der Spannuten mit einzelnen axial gerichteten Kühl-/Schmiermittelstrahlen. Dieses Konzept setzt allerdings nicht notwendigerweise voraus, dass das Werkzeug gerade genutet ist. Die Spannuten können auch wendelförmig verlaufen. Wenn die Spannuten geradlinig, d.h. axial ausgerichtet verlaufen, lässt sich ein noch größerer Füllungsgrad der Spannuten mit Kühl-/Schmiermittel im Eingriffsbereich des Schneidteils erzielen. Dabei ergibt sich der weitere Vorteil, dass das Herstellungsverfahren vereinfacht wird, indem die Schleifscheibe für das Einschleifen der Spannuten im Schneidteil gleichzeitig für die Herstellung der Führungsvertiefungen im Schaft des Werkzeugs genutzt werden kann. Außerdem erlaubt ein gerade genutetes Werkzeug die einstückige Herstellung des Werkzeugs im Extrusionsverfahren, was insbesondere dann von Vorteil ist, wenn als Werkstoff ein Hartstoff, vorzugsweise ein Sinterwerkstoff wie Vollhartmetall oder Cermet, zur Anwendung kommt.

Wenn zumindest der Schaft und der Einspannabschnitt des Werkzeugs aus sinterfähigem Material, wie zum Beispiel aus Vollhartmetall oder einem Cermet-Werkstoff hergestellt wird, lassen sich die Kühl-/Schmiermittelkanäle im Einspannabschnitt und gegebenenfalls die Führungsvertiefungen im Schaft im Werkzeugrohling so weit vorformen, dass entweder eine Nachbearbeitung nach dem Sinterprozess überhaupt nicht mehr erforderlich wird, oder auf ein Minimum beschränkt bleiben kann. Neben einer verbesserten Wirtschaftlichkeit bei der Herstellung des Werkzeugs ergibt sich darüber hinaus ein Minimum an Materialaufinrand für das erforderliche Rohmaterial.

Das drehantreibbare, spanabhebende Werkzeug kann verschiedenste Anwendungsgebiete haben. Es kann beispielsweise als Feinbearbeitungswerkzeug, als Aufbohrwerkzeug, insbesondere als Reibahle, als Fräswerkzeug oder als Gewindeschneidwerkzeug ausgebildet sein. Insbesondere dann, wenn das Werkzeug, beispielsweise die Reibahle, mit einer über den Umfang ungleichmäßigen Verteilung der Schneidstollen ausgebildet ist, hat das erfindungsgemäße Werkzeug den besonderen Vorteil, dass die Versorgung der Schneiden mit Kühl-/Schmiermittel für alle Spannuten mit gleicher Qualität sichergestellt werden kann, ohne den herstellungstechnischen Aufwand vergrößern zu müssen. Für die ausreichende Versorgung der im Eingriff befindlichen Schneiden des Werkzeugs genügen für die gängigen Geometrien der in Frage kommenden Werkzeuge Strömungsmitteldrücke im Bereich zwischen 5 und 70 bar. Dies lässt es zu, mit Strömungsmitteln unterschiedlicher Konsistenz zu arbeiten, beispielsweise mit flüssigen Kühl/Strömungsmitteln, aber auch mit Aerosolen, wie sie bei der Trockenbearbeitung bzw. bei der MMS-Technologie verwendet werden.

Mit der Weiterbildung des Anspruchs 18 gelingt es, die einzelnen, aus dem Einspannabschnitt austretenden Kühl-/Schmiermittelstrahlen .zusätzlich zu stabilisieren, um längere axiale Distanzen zwischen Einspannabschnitt und Schneidteil so zu überbrücken, dass die einzelnen Kühl-/Schmiermittelstrahlen die zugeordneten Spannuten mit möglichst großer Flächenüberlappung erreichen.

Weitere vorteilhafte Ausgestaltungen der Erfindung sind Gegenstand der übrigen Unteransprüche.

Nachstehend werden anhand schematischer Zeichnungen mehrere Ausführungsbeispiele der Erfindung näher erläutert. Es zeigen:
Figur 1 eine schematische Seitenansicht eines erfindungsgemäßen drehantreibbaren spanabhebenden Werkzeugs in der Ausgestaltung als Reibahle nach einer ersten Ausführungsform;
Figur 2 in vergrößerter Darstellung die Ansicht gemäß "II" in Figur 1;
Figur 3 eine perspektivische Ansicht des Werkzeugs gemäß Figur 1 und 2;
Figur 4 einen Längsquerschnitt des erfindungsgemäßen Werkzeugs nach einer zweiten Ausführungsform; und
Figur 5 einen Längsquerschnitt des erfindungsgemäßen Werkzeugs nach einer dritten Ausführungsform.

In den Figuren ist eine Ausführungsform eines drehantreibbaren, spanabhebenden Bohrungsnachbearbeitungswerkzeugs in der Ausgestaltung als Reibahle, insbesondere als Hochleistungs-Reibahle gezeigt. Das mit dem Bezugszeichen 20 bezeichnete drehantreibbare, spanabhebende Feinbearbeitungswerkzeug ist einstückig ausgebildet und besteht aus einem Sinterwerkstoff, wie z.B. Vollhartmetall oder einem Cermet-Werkstoff, d.h. einem Sinterwerkstoff, der als wesentlichen Härteträger die Carbide und Nitride des Titans (TiC, TiN) besitzt und bei dem als Bindephase überwiegend Nickel zum Einsatz kommt.

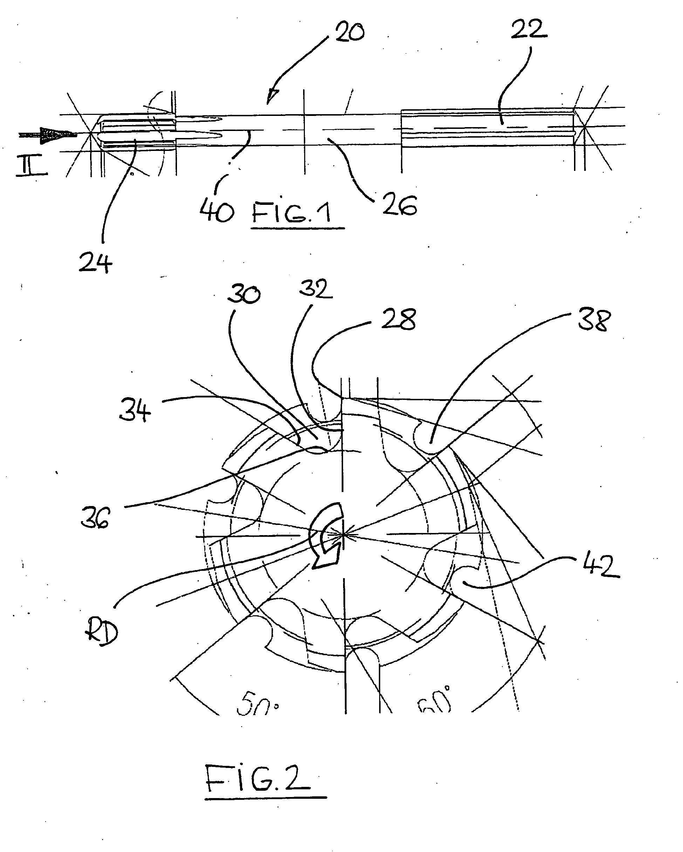

Das Werkzeug hat drei Abschnitte, nämlich einen Einspannabschnitt 22, ein Schneidteil 24 und einen dazwischen liegenden, im Durchmesser verringerten Schaft 26. Das Schneidteil 24 ist gerade genutet und hat eine Mehrzahl von Schneidkanten 28 zwischen denen sich jeweils eine Spannut 30 befindet. Die Spannut hat im wesentlichen zwei Flanken, nämlich eine zur Schneidkante führende erste Flanke 32 und eine dazu im Winkel verlaufende zweite Flanke 34, sowie einen dazwischen liegenden gerundeten Nutgrund 36 (siehe Figur 2). Die Schneidkanten 28 sind bei dem Ausführungsbeispiel über den Umfang ungleichmäßig verteilt, was bei schnell laufenden Hochleistungs-Reibahlen den Vorteil einer verbesserten Laufruhe und verringerten Schwingungsneigung mit sich bringt. Die Teilung kann jedoch -auch gleichmäßig sein.

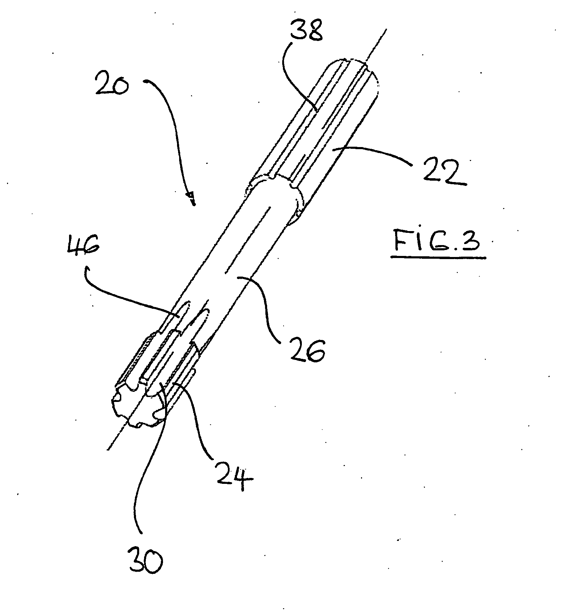

Die Besonderheit des in Figuren 1 bis 6 gezeigten Werkzeugs besteht in der Ausgestaltung der in das Werkzeug integrierten Kühl-/Schmiermittelversorgung, die nachfolgend näher beschrieben wird:

Im Einspannabschnitt 22 sind in axialer Richtung fluchtend mit den Spannuten 30 innenliegende Kühl-/Schmiermittelkanäle 38 in Form von Axialnuten ausgebildet, die sich jeweils parallel zur Werkzeugachse 40 erstrecken und auf der dem Schneidteil 24 zugewandten Seite des Einspannabschnitts 22 jeweils eine axiale Austritts- bzw. Mündungsöffnung 42 ausbilden.

Die aus den Axialnuten austretenden Kühl-/Schmiermittelstrahle schießen ohne seitliche Führung in axialer Richtung radial außerhalb des Schafts 26 zum Schneidteil 24 und treffen in die Spannuten 30.

Die Querschnitte der innenliegenden Kühl-/Schmiermittelkanäle 38 und damit der Mündungsöffnungen 42 sind dem Querschnitt der zugehörigen Spannuten 24 angepasst. Sie können im wesentlichen deckungsgleich mit dem Querschnitt der Spannuten sein.

Im gezeigten Beispiel ist der Querschnitt der axialen Austrittsöffnung 42 hinsichtlich Lage und/oder Form der Geometrie der zugeordneten Spannut 30 derart angepasst, dass er in der axialen Projektion (Figur 2) die jeweilige zur Schneidkante 28 führende Flanke der Spannut 30 erfasst bzw. dieser nahe kommt, vorzugsweise berührt.

In jedem Fall ist der Querschnitt der jeweiligen axialen Austrittsöffnung 42 für den Kühl-/Schmiermittelstrahl mit einem Querschnitt versehen, der dem Querschnitt der zugehörigen Spannut 30 angepasst ist.

Bei der Ausgestaltung gemäß Figur 1 bis 3 ist die Spannut 30 tiefer als der Außendurchmesser des Schafts 26 und damit tiefer als der Nutgrund der axialen Kanäle 38. Die Spannuten 30 haben demgemäß einen Auslaufabschnitt 46 zum Schaft 26.

Auf der in Figur 1 rechten Seite des Einspannabschnitts 22 wird - wenn das Werkzeug in einer Werkzeugaufnahme eingespannt ist - über eine geeignete Schnittstelle Kühl-/Schmiermittel unter einem Druck von beispielsweise 5 bis 70 bar eingespeist. Hierbei kann es sich um flüssiges oder gasförmiges, das Schmiermittel transportierendes Strömungsmittel handeln, beispielsweise um ein Aerosol, d.h. mit Schmiermitteltröpfchen versetzte Druckluft. Die Drehrichtung des Werkzeugs ist in Figur 2 mit dem Pfeil RD angedeutet. Die Nuten 38 werden von dem Spannfutter radial außen abgedeckt, so dass Kühl-/Schmiermittelkanäle 38 ausgebildet werden.

Das im Einspannabschnitt 22 über eine übliche Schnittstelle eingespeiste Kühl-/Strömungsmittel strömt somit mit hoher Geschwindigkeit durch die im Einspannabschnitt 22 ausgebildeten Kühl-/Schmiermittelkanäle 38 und tritt an den Mündungsöffnungen 42 mit axialer Ausrichtung aus. Im radial inneren Bereich sind die einzelnen Kühl-/Schmiermittelstrahlen nur von der zylindrischen Mantelfläche des Schafts 26 quasi "geführt", ansonsten jedoch frei fliegend.

Die einzelnen, über den Umfang entsprechend der Teilung des Werkzeugs verteilten Kühl-/Schmiermittelstrahlen treffen sozusagen nach frei fliegender Strömung die Spannuten 30. Sobald das Werkzeug in die zu bearbeitende Bohrung, vorzugsweise eine Durchgangsbohrung, eintaucht, wird die Spannut von der Bohrungswandung weitestgehend über den gesamten Umfang geschlossen, so dass erneut ein quasi geschlossener Strömungskanal für das eingespeiste Kühl-/Strömungsmittel geschaffen wird. Das in diesem Strömungskanal von den zugeordneten innenliegenden Kühl-/Schmiermittelkanälen 38 kommende und aufgefangene Strömungsmittel hat - wie durch Versuche gezeigt werden konnte - schon bei Strömungsmittel-Systemdrücken von über 5 bar, vorzugweise von über 10 bar, einen derartig hohen Massendurchsatz, dass sich in den Spannuten ein Strömungsprofil ausbildet, welches sicherstellt, dass die Schneidkanten prozesssicher mit einer ausreichenden Schmiermittelmenge versorgt werden. Dadurch ist sichergestellt, dass die Standzeit des Werkzeugs auf einem ausreichenden Niveau gehalten werden kann.

Durch Versuche wurde herausgefunden, dass die Durchflussmenge des Kühl-/Schmiermittels in den Spannuten ganz entscheidend von der Profilgestaltung der im Einspannabschnitt ausgebildeten Kühl-/Schmiermittelkanäle abhängt.

Durch die erfindungsgemäße, außenliegende Zuführung des Kühl-/Schmiermittels und durch den erfindungsgemäß vergrößerten Querschnitt der innenliegenden Kühl-/Schmiermittelkanäle im Einspannabschnitt 22 kann die zu den Schneiden geführte Kühl-/Schmiermittelmenge im Vergleich zu Werkzeugen mit zentralem innenliegenden Versorgungskanal erheblich angehoben werden. Dies kann nicht nur zur Verbesserung der Standzeit der Schneiden, sondern gleichzeitig zu einer Verbesserung des Späne-Abtransports genutzt werden.

Die Zuführung des Kühl-/Schmiermittels erfolgt bei dem erfindungsgemäßen Werkzeug darüber hinaus sehr verlustarm, da mehrfache Umlenkungen vermieden werden. Da eine Vielzahl von verhältnismäßig großflächigen Kühl-/Schmiermittelkanälen im Einspännabschnitt ausgebildet sind, ergibt sich für das Werkzeug ein geringes Gewicht, beziehungsweise ein geringer Rohmaterialbedarf für den Fall, dass das Werkzeug aus einem Sinterrohling hergestellt wird.

Die innenliegenden Kühl-/Schmiermittelkanäle im Einspannabschnitt und auch die Spannuten im Schneidteil können bereits im Sinterrohling weitestgehend mit Endmaß im Urformprozess hergestellt werden. Eine Bearbeitung der innenliegenden Kühlkanäle im Einspannabschnitt ist dann nicht mehr erforderlich. Ebenso kann ein Einschleifen von Führungsvertiefungen im Schaft ganz entfallen. Lediglich im Bereich des Schneidteils sind spanabhebende Bearbeitungsvorgänge, nämlich das Schleifen auf Endmaß, erforderlich, wodurch sich ein stark verringertes.Zeitspanvolumen bei der Herstellung des Werkzeugs ergibt.

Das Werkzeug gemäß Figur 1 bis 3 wurde als Hochleistungs-Reibahle mit einem Nenndurchmesser von 8,0 mm ausgebildet. Es konnte anhand von Versuchen nachgewiesen werden, dass die auf die einzelnen Kühl-/Strömungsmittelstrahle einwirkende Fliehkraft die Versorgung der Schneiden mit einer ausreichenden Kühl-/Schmiermittelmenge nicht beeinträchtigt. Das Zeitspanvolumen bei der Herstellung, d.h. beim Nutenschleifen, ist bei dem beschriebenen Werkzeug auf ein Minimum beschränkt.

Es kann ein Sinterrohling für einen bestimmten Nenndurchmesserbereich von z.B. 6 bis 8 mm herangezogen werden, wobei lediglich geringfügig variierende spanabhebende Bearbeitungsvorgänge anfallen.

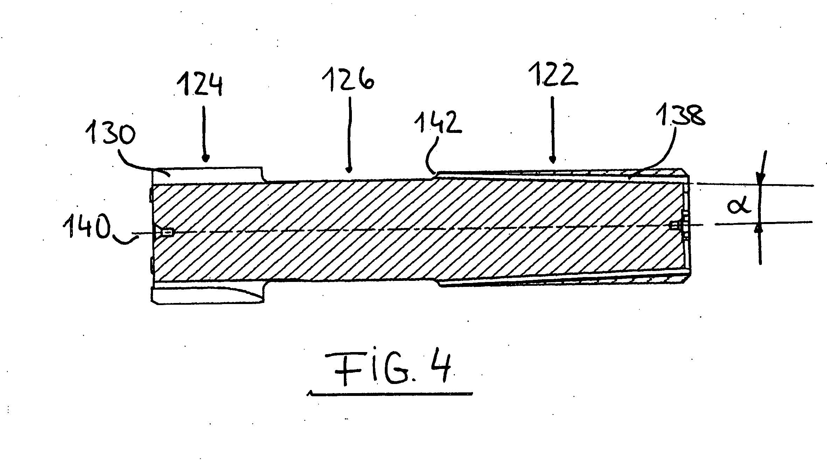

Anhand der Figur 4 wird eine zweite Ausführungsform des Werkzeugs beschrieben. Dabei werden diejenigen Komponenten des Werkzeugs, die.denjenigen der Ausführungsform nach den Figuren 1 bis 3 entsprechen, mit ähnlichen Bezugszeichen versehen, denen jedoch eine "1" vorangestellt ist.

Die zweite Ausführungsform entspricht im Wesentlichen der ersten Ausführungsform mit der Ausnahme, dass sich die Kühl-/Schmiermittelkanäle 138 im Einspannabschnitt 122 nicht parallel zur Werkzeugachse 140 erstrecken, sondern zu dieser in einem Anstellwinkel α geführt sind. Der Anstellwinkel α ist so gewählt, dass eine gedachte Verlängerung der Kühl-/Schmiermittelkanäle 138 über den dazwischen liegenden Schaftabschnitt 126 hinweg im Wesentlichen mit den Spannuten 130 des Schneidteils 124 fluchtet.

Bei der in Figur gezeigten vierten Ausführungsform liegen die Spannuten 130 des Schneidteils 124 auf einem größeren Teilkreis als die Austrittsöffnungen 142 der Kühl-/Schmiermittelkanäle 138. Jedoch ist auch der umgekehrte Fall denkbar. Durch die Anstellung der Kühl-/Schmiermittelkanäle 138 zur Werkzeugachse 140 wird erreicht, dass der Durchmesser des Einspannabschnitts 122 unabhängig von dem des Schneidteils 124 gestaltet sein kann und ein etwaiger, daraus resultierender Unterschied der radialen Abstände der Mündungsöffnungen 142 und der Spannnuten 130 von der Werkzeugachse 140 ausgeglichen werden kann.

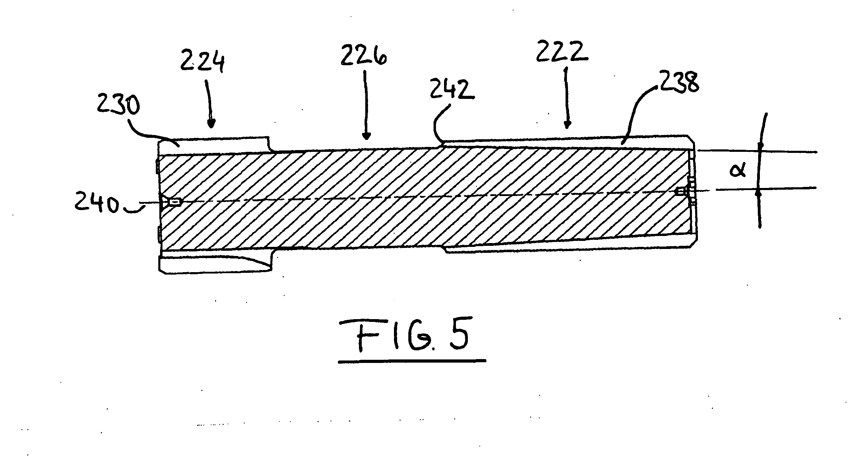

Figur 5 zeigt eine dritte Ausführungsform des Werkzeugs, welche im Grunde eine Kombination der ersten und zweiten Ausführungsformen darstellt. Dabei werden diejenigen Komponenten des Werkzeugs, die denjenigen der Ausführungsform nach den Figuren 1 bis 4 entsprechen, mit ähnlichen Bezugszeichen versehen, denen jedoch eine "2" vorangestellt ist.

Das in Figur 5 gezeigte erfindungsgemäße Werkzeug weist radial offene Kühl-/Schmiermittelkanäle 238 im Einspannabschnitt 222 auf, welche in einem Anstellwinkel α zur Werkzeugachse 240 geführt sind und über eine gedachte Verlängerung über das Schaftteil 226 hinweg im Wesentlichen mit den Spannuten 230 des Schneidteils 224 fluchten.

Selbstverständlich sind Abweichungen von den beschriebenen Ausführungsbeispielen möglich, ohne den Grundgedanken der Erfindung zu verlassen.

Der Außendurchmesser des Schafts kann z.B. weiter reduziert werden, so dass auch der Kanal 38 im Querschnitt vergrößert und in größere Deckung mit der Spannut 30 gebracht werden kann.

So ist es beispielsweise nicht unbedingt erforderlich, den Schneidkopf einstückig mit dem Rest des Werkzeugs auszubilden. Der Schneidkopf kann auch an den Schaft in bekannter Weise dreh- und axialfest angesetzt, beispielsweise angelötet, werden. Die vorstehend angesprochenen Vorteile bleiben bei dieser Variante sämtlich erhalten.

Das Werkzeug selbst muss auch nicht notwendigerweise aus einem Sinterwerkstoff hergestellt sein.

Die verschiedenen Funktionsabschnitte des Werkzeugs können darüber hinaus mit an sich bekannten Beschichtungen versehen sein. Schließlich kann das Schneidteil des Werkzeugs auch mit Schneideinsätzen ausgestattet sein.

Sämtliche, vorstehend beschriebene Werkzeuge sind als Reibahlen ausgebildet. Es soll jedoch hervorgehoben werden, dass das erfindungsgemäße Werkzeug gleichermaßen als gewöhnliches Aufbohrwerkzeug, als Fräswerkzeug oder als Gewinde-Schneidwerkzeug ausgebildet sein kann.

Wenn es sich um ein gerade genutetes Werkzeug handelt, ergeben sich zusätzliche Vorteile bei der Herstellung, insbesondere dann, wenn das Werkzeug aus einem Sintermaterialrohling hergestellt wird, der beispielsweise extrudiert oder in einem Formpressverfahren mit bereits eingearbeiteten innenliegenden Kühl-/Schmiermittelkanälen und/oder Führungsvertiefungen und/oder vorbereiteten Spannuten ausgebildet werden kann.

Das Schneidteil kann jedoch auch mit wendelförmigen Spannuten ausgestattet sein. In diesem Fall kann es von Vorteil sein, wenn das Schneidteil als separates Bauteil an dem Schaft angesetzt ist.

Die angestellten Kühl-/Schmiermittelkanäle der zweiten und dritten Ausfilhrungsformen können auch direkt aus einem zentralen Kühl- /Schmiermittelkanal abzweigen, wodurch sich entsprechende, radial verlaufende Verbindungskanäle zwischen der Kühlmitteleinspeisung und den von der Werkzeugachse beanstandeten und in Umfangsrichtung verteilten Kühl-/Schmiermittelkanälen erübrigen.

Die Erfindung schafft somit ein drehantreibbares, spanabhebendes Werkzeug, vorzugsweise in der Ausgestaltung als Feinbearbeitungswerkzeug, wie. z.B. als Hochleistungsreibahle, mit integrierter Kühl-/Schmiermittelversorgung, zur Bearbeitung von Bohrungen, vorzugsweise von Durchgangsbohrungen. Das Werkzeug hat ein Schneidteil, an dem eine Vielzahl von Schneiden beziehungsweise Schneidkanten und Spannuten ausgebildet sind, und einen Schaft, der auf einer dem Schneidteil abgewandten Seite einen Einspannabschnitt ausbildet. Zur wirksameren Versorgung der Schneidkanten mit Kühl-/Strömungsmittel bei gleichzeitiger Verbesserung der Wirtschaftlichkeit des Herstellungsverfahrens sind im Einspannabschnitt eine der Anzahl der Spannuten entsprechende Anzahl von Kühl- /Schmiermittelkanälen ausgebildet, die jeweils eine axiale Austrittsöffnung haben. Das aus den Kühl-/Schmiermittelkanälen austretende Kühl-/Schmiermittel wird quasi "frei fliegend", ggfs. durch den Außendurchmesser des Schafts gestützt, in die zugehörige Spannut des Schneidteils eingespeist.

Gemäß einer beispielhaften Ausführungsform der Erfindung wird ein drehantreibbares spanabhebendes Werkzeug, insbesondere Feinbearbeitungswerkzeug, wie z.B. Reibahle, mit integrierter Kühl- /Schmiennittelversorgung, zur Bearbeitung von Bohrungen, insbesondere Durchgangsbohrungen, mit einem Schneidteil 24, 124, 224, an dem eine Vielzahl von Schneiden 28, 128, 228 bzw. Schneidkanten und Spannuten 30, 130, 230 ausgebildet sind, und einem Schaft 26, 126, 226, der auf einer dem Schneidteil 24, 124, 224 abgewandten Seite einen Einspannabschnitt 22, 122, 222 ausbildet, wobei im Einspannabschnitt 22, 122, 222 eine der Anzahl der Spannuten 30 entsprechende Anzahl von Kühl-/Schmiermittelkanälen 38 derart ausgebildet sind, dass das aus stirnseitigen Austrittsöffnungen 42 des Einspannabschnitts 22, 122, 222 austretende Kühl-/Schmiermittel in einem freien Strahl entlang des Schafts 26 in jeweils eine zugeordnete Spannut 30 des Schneidteils 24 einspeisbar ist.

In einer weiteren erfindungsgemäßen Ausführungsform wird ein Werkzeug zur Verfügung gestellt, wobei die Kühl- /Schmiermittelkanäle 38 im Einspannabschnitt 22, 122, 222 umfangsseitig geschlossen sind.

Gemäß einem weiteren Ausführungsbeispiel der vorliegenden Erfindung wird ein Werkzeug zur Verfügung gestellt, wobei die Kühl- /Schmiermittelkanäle 38 im Einspannabschnitt 22, 122, 222 radial offen sind.

Gemäß einer beispielhaften Ausführungsform der Erfindung wird ein Werkzeug zur Verfügung gestellt, wobei die jeweilige axiale Austrittsöffnung 42, 142, 242 der Kühl-/Schmiermittelkanäle 38 im Einspannabschnitt 22, 122, 222 einen Querschnitt hat, der dem Querschnitt der zugehörigen Spannut 30, 130, 230 angepasst ist.

In einer weiteren erfindungsgemäßen Ausführungsform wird ein Werkzeug zur Verfügung gestellt, wobei der Querschnitt der axialen Austrittsöffnung 42 hinsichtlich Lage und/oder Form der Geometrie der zugeordneten Spannut 30 derart angepasst ist, dass er in der axialen Projektion die jeweilige zur Schneidkante 28 führende Flanke 32 der Spannut 30 erfasst bzw. dieser nahe kommt, vorzugsweise berührt.

Gemäß einem weiteren Ausführungsbeispiel der vorliegenden Erfindung wird ein Werkzeug zur Verfügung gestellt, wobei die Kühl-/Schmiermittelkanäle 38 im Einspannabschnitt 22 axial ausgerichtet sind.

Gemäß einer beispielhaften Ausführungsform der Erfindung wird ein Werkzeug zur Verfügung gestellt, wobei die Kühl-/Schmiermittelkanäle 138, 238 im Einspannabschnitt 122, 222 in der Weise aus dem Einspannabschnitt 122, 222 austreten, dass sie unter einem Anstellwinkel α zu einer zugeordneten Spannut 130, 230 des Schneidteils 124, 224 geführt sind.

In einer weiteren erfmdungsgemaßen AusRihrungsform wird ein Werkzeug zur Verfügung gestellt, wobei die Spannuten 30,130 230 geradlinig verlaufen.

Gemäß einer beispielhaften Ausführungsform der Erfindung wird ein Werkzeug zur VerRiguag gestellt, wobei es aus einem Hartstoff, wie z.B. aus Vollhartmetall oder einem Cermet-Werkstoff hergestellt ist.

Gemäß einem weiteren Ausfübnmgsbeispiel der vorliegenden Erfindung wird ein Werkzeug zur Verfugung gestellt, gekennzeichnet durch die Ausgestaltung als Aufbohrvverkzeug.

Gemäß einer beispielhaften Ausftlbrungsform der Erfindung wird ein Werkzeug zur Verfügung gestellt, gekennzeichnet durch die Ausgestaltung als Reibahle.

In einer weiteren erfindungsgemäßen Ausführungsform wird ein Werkzeug zur Verfügung gestells, gekennzeichnet durch die Ausgestaltung als Fräswerkzeug.

Gemäß einem weiteren Ausführungsbeispiel der vorliegenden Erfindung wird ein Werkzeug zur Verfügung gestellt, gekennzeichnet durch die Ausgestaltung als Gewindeschneidwerkzeug.

In einer weiteren erfindungsgemäLien Ausfiihrungsform wird ein Verfahren zur Verfügung gestellt, wobei das Kühl- und Schmiermittel von einem wässrigen Strömungsmittel gebildet ist.

Gemäß einem weiteren Ausführungsbeispiel der vorliegenden Erfindung wird ein Verfahren zur Verfügung gestellt, wobei das Kühl- und Schmiermittel von einem gasförmigen Fluid gebildet ist, das mit einem Schmiermedium versetzt ist.

Gemäß einer beispielhaften Ausführungsform der Erfindung wird ein Verfahren zur Verfügung gestellt, wobei die Strömung des Kühl- und Schmiermittels im Einspannabschnitt 22, 122, 222 mit einem Drall um die Strömungsachse beaufschlagt wird.

## Patentansprüche

1. Drehantreibbares spanabhebendes Werkzeug, insbesondere Feinbearbeitungswerkzeug, wie z.B. Reibahle, mit integrierter Kühl/Schmiermittelversorgung, zur Bearbeitung von Bohrungen, insbesondere Durchgangsbohrungen, mit einem Schneidteil (24; 124; 224), an dem eine Vielzahl von Schneiden (28; 128; 228) bzw. Schneidkanten und Spannuten (30; 130; 230) ausgebildet sind, und einem Schaft (26; 126; 226), der auf einer dem Schneidteil (24; 124; 224) abgewandten Seite einen Einspannabschnitt (22; 122; 222) ausbildet, **dadurch gekennzeichnet, dass** im Einspannabschnitt (22; 122; 222) eine der Anzahl der Spannuten (30) entsprechende Anzahl von Kühl-/Schmiermittelkanälen (38) mit dem Schneidteil (24; 124; 224) abgewandten Eingangsöffnungen derart ausgebildet sind, dass aus dem Schneidteil (24; 124; 224) zugewandten stirnseitigen Austrittsöffnungen (42) des Einspannabschnitts (22; 122; 222) austretende Kühl-/Schmiermittel entlang des Schafts (26) ohne radial außenliegende Begrenzung in jeweils eine zugeordnete Spannut (30) des Schneidteils (24) einspeisbar ist.

2. Werkzeug nach Anspruch 1 , **dadurch gekennzeichnet, dass** die Kühl/Schmiermittelkanäle (38) im Einspannabschnitt (22; 122; 222) umfangsseitig geschlossen sind oder **dadurch gekennzeichnet, dass** die Kühl/Schmiermittelkanäle (38) im Einspannabschnitt (22; 122; 222) radial offen sind.

3. Werkzeug nach einem der Ansprüche 1 bis 2, **dadurch gekennzeichnet, dass** die jeweilige axiale Austrittsöffnung (42; 142; 242) der Kühl/Schmiermittelkanäle (38) im Einspannabschnitt (22; 122; 222) einen Querschnitt hat, der dem Querschnitt der zugehörigen Spannut (30; 130; 230) angepasst ist.

4. Werkzeug nach Anspruch 3, **dadurch gekennzeichnet, dass** der Querschnitt der axialen Austrittsöffnung (42) hinsichtlich Lage und/oder Form der Geometrie der zugeordneten Spannut (30) derart angepasst ist, dass er in der axialen Projektion die jeweilige zur Schneidkante (28) führende Flanke (32) der Spannut (30) erfasst bzw. dieser nahe kommt, vorzugsweise berührt.

5. Werkzeug nach einem der Ansprüche 1 bis 4, **dadurch gekennzeichnet, dass** die Kühl-/Schmiermittelkanäle (38) im Einspannabschnitt (22) axial ausgerichtet sind.

6. Werkzeug nach einem der Ansprüche 1 bis 3, **dadurch gekennzeichnet, dass** die Kühl-/Schmiermittelkanäle (138; 238) im Einspannabschnitt (122; 222) in der Weise aus dem Einspannabschnitt (122; 222) austreten, dass sie unter einem Anstellwinkel ([alpha]) zu einer zugeordneten Spannut (130; 230) des Schneidteils (124; 224) geführt sind.

7. Werkzeug nach einem der Ansprüche 1 bis 6, **dadurch gekennzeichnet, dass** die Spannuten (30; 130; 230) geradlinig verlaufen.

8. Werkzeug nach einem der Ansprüche 1 bis 7, **dadurch gekennzeichnet, dass** der frei austretende Kühl-/Schmiermittelstrahl zumindest über eine bestimmte axiale Strecke (Länge des Schafts) vom Aussendurchmesser des an den Einspannabschnitt (22) anschliessenden Schaftabschnitts (26) gestützt ist.

9. Werkzeug nach einem der Ansprüche 1 bis 8, **dadurch gekennzeichnet, dass** es aus einem Hartstoff, wie z.B. aus Vollhartmetall oder einem Cermet-Werkstoff hergestellt ist.

10. Werkzeug nach Anspruch 9, **dadurch gekennzeichnet, dass** die Kühl-/Schmiermittelkanäle (38) im Einspannabschnitt (22) zumindest teilweise im Werkzeugrohling vorgeformt sind.

11. Werkzeug nach einem der Ansprüche 1 bis 10, **gekennzeichnet durch** die Ausgestaltung als Aufbohrwerkzeug oder **gekennzeichnet durch** die Ausgestaltung als Reibahle oder **gekennzeichnet durch** die Ausgestaltung als Fräswerkzeug oder **gekennzeichnet durch** die Ausgestaltung als Gewindeschneidwerkzeug.

12. Verfahren zur Versorgung der Schneiden eines Werkzeugs nach einem der Ansprüche 1 bis 11 mit einem unter Druck stehenden Kühl- und Schmiermittel, **dadurch gekennzeichnet, dass** das Kühl- und Schmiermittel über den Einspannabschnitt (22) unter einem Druck zwischen 5 und 80 bar, vorzugsweise zwischen 10 und 70 bar zugeführt wird.

13. Verfahren nach Anspruch 12, **dadurch gekennzeichnet, dass** das Kühl- und Schmiermittel von einem wässrigen Strömungsmittel gebildet ist.

14. Verfahren nach Anspruch 12, **dadurch gekennzeichnet, dass** das Kühl- und Schmiermittel von einem gasförmigen Fluid gebildet ist, das mit einem Schmiermedium versetzt ist.

15. Verfahren nach einem der Ansprüche 12 bis 14, **dadurch gekennzeichnet, dass** die Strömung des Kühl- und Schmiermittels im Einspannabschnitt (22) mit einem Drall um die Strömungsachse beaufschlagt wird.

## Claims

1. Rotationally drivable cutting tool, particularly finishing tool, such as for example a reamer, with integrated coolant/lubricant supply, for machining of drill holes, particularly through-holes, with a cutting section (24; 124; 224), on which a plurality of cutting edges (28; 128; 228) or cutting edges and chip flutes (30; 130; 230) are embodied, and a shank (26; 126; 226), which embodies, on the opposite side of the cutting section (24; 124; 224), a chuck section (22; 122; 222), **characterized by** a number of coolant/lubricant channels (38) corresponding to the number of flutes (30) with inlets facing away from the cutting section (24; 124; 224) embodied in such a way that coolant/lubricant exiting the outlets (42) in the chuck section (22; 122; 222), which are facing the cutting section (24; 124; 224), can be fed along the shank (26) without a boundary on the radial outside into a respective associated flute (30) of the cutting section (24).

2. Tool according to claim 1, **characterized by** the coolant/lubricant channels (38) in the chuck section (22; 122; 222) being circumferentially enclosed or **characterized by** the coolant/lubricant channels (38) in the chuck section (22; 122; 222) being radially open.

3. Tool according to any one of claims 1 or 2, **characterized by** the respective axial outlet opening (42; 142; 242) of the coolant/lubricant channels (38) in the chuck section (22; 122; 222) having a cross section that is adapted to the cross section of the corresponding flute (30; 130; 230).

4. Tool according to claim 3, **characterized by** the cross section of the axial outlet opening (42), with respect to location and/or shape, being adapted in such a way to the geometry of the corresponding flute (30), that, in axial projection, it covers the respective face (32) of the flute (30) leading to the cutting edge (28) or comes close to it, preferably touches it.

5. Tool according to any one of claims 1 to 4, **characterized by** the coolant/lubricant channels (38) in the chuck section (22) being oriented in axial direction.

6. Tool according to any one of claims 1 to 3, **characterized by** the coolant/lubricant channels (138; 238) in the chuck section (122; 222) exiting the chuck section (122; 222) in such a way that they are directed in an angle of incidence ([alpha]) towards a corresponding flute (130; 230) of the cutting section (124; 224).

7. Tool according to any one of claims 1 to 6, **characterized by** the flutes (30; 130; 230) running rectilinearly.

8. Tool according to any one of claims 1 to 7, **characterized by** the freely exiting coolant/lubricant jet being supported at least over a certain axial distance (length of the shank) by the outside diameter of the shank section (26) adjacent to the chuck section (26).

9. Tool according to any one of claims 1 to 8, **characterized by** being made of hard material such as for example solid cemented carbide or cermet.

10. Tool according to claim 9, **characterized by** the coolant/lubricant channels (38) in the chuck section (22) being at least partially preformed in the tool blank.

11. Tool according to any one of claims 1 to 10, **characterized by** the embodiment as boring tool or **characterized by** the embodiment as reamer or **characterized by** the embodiment as milling tool or **characterized by** the embodiment as thread cutting tool.

12. Method for supplying the cutting edges of a tool according to any one of claims 1 to 11 with pressurized coolant and lubricant, **characterized by** the coolant and lubricant being conveyed via the chuck section (22) under a pressure between 5 and 80 bar, preferably between 10 and 70 bar.

13. Method according to claim 12, **characterized by** the coolant and lubricant consisting of aqueous fluid.

14. Method according to claim 12, **characterized by** the coolant and lubricant consisting of gaseous fluid, which is mixed with a lubricating medium.

15. Method according to any one of claims 12 to 14, **characterized by** the fluid flow of the coolant and lubricant being imparted with a twist around the axis of flow in the chuck section (22).

## Revendications

1. Outil d'usinage pouvant être entraîné par rotation, en particulier outil d'usinage fin, comme par exemple un alésoir, comprenant une alimentation intégrée en réfrigérant/lubrifiant, pour l'usinage d'alésages, en particulier d'alésages traversants, comprenant une partie coupante (24 ; 124 ; 224), sur laquelle sont formées une pluralité de lames (28 ; 128 ; 228), respectivement des arêtes coupantes et de rainures à copeaux (30 ; 130 ; 230), et une tige (26 ; 126 ; 226) qui forme une partie de serrage (22 ; 122 ; 222) sur un côté opposé à la partie coupante (24 ; 124 ; 224), **caractérisé en ce qu'**un nombre, correspondant au nombre des rainures à copeaux (30), de canaux de réfrigérant/lubrifiant (38) dotés d'ouvertures d'entrée opposées à la partie de coupe (24 ; 124 ; 224) est formé dans la partie de serrage (22 ; 122 ; 222), de telle sorte que du réfrigérant/lubrifiant sortant d'ouvertures de sortie (42) côté avant, associées à la partie de coupe (24 ; 124 ; 224), de la partie de serrage (22 ; 122 ; 222) puisse être injecté le long de la tige (26) sans délimitation radialement extérieure dans respectivement une rainure à copeaux (30) associée de la partie de coupe (24).

2. Outil selon la revendication 1, **caractérisé en ce que** les canaux à réfrigérant/lubrifiant (38) sont fermés côté périphérie dans la partie de serrage (22 ; 122 ; 222) ou **caractérisé en ce que** les canaux à réfrigérant/lubrifiant (38) sont ouverts radialement dans la partie de serrage (22 ; 122 ; 222).

3. Outil selon l'une des revendications 1 et 2, **caractérisé en ce que** l'ouverture de sortie (42 ; 142 ; 242) axiale respective des canaux à réfrigérant/lubrifiant (38) dans la partie de serrage (22 ; 122 ; 222) a une section transversale, qui est adaptée à la section transversale de la rainure à copeaux (30 ; 130 ; 230) spécifique.

4. Outil selon la revendication 3, **caractérisé en ce que** la section transversale de l'ouverture de sortie (42) axiale est adaptée en ce qui concerne la position et/ou la forme à la géométrie de la rainure à copeaux (30) associée, de telle sorte qu'elle reçoit dans la projection axiale le flanc (32) respectif, allant vers l'arête de coupe (28), de la rainure à copeaux (30) et est proche de celui-ci, de préférence le touche.

5. Outil selon l'une des revendications 1 à 4, **caractérisé en ce que** les canaux à réfrigérant/lubrifiant (38) sont orientés axialement dans la partie de serrage (22).

6. Outil selon l'une des revendications 1 à 3, **caractérisé en ce que** les canaux à réfrigérant/lubrifiant (138 ; 238) dans la partie de serrage (122 ; 222) sortent de la partie de serrage (122 ; 222) de telle manière qu'ils sont guidés sous un angle d'incidence ([alpha]) par rapport à une rainure à copeaux (130 ; 230) associée de la partie de coupe (124 ; 224).

7. Outil selon l'une des revendications 1 à 6, **caractérisé en ce que** les rainures à copeaux (30 ; 130 ; 230) sont agencées en ligne droite.

8. Outil selon l'une des revendications 1 à 7, **caractérisé en ce que** le jet de réfrigérant/lubrifiant sortant librement est soutenu au moins sur un tronçon axial déterminé (longueur de la tige) par le diamètre extérieur de la partie de tige (26) se raccordant à la partie de serrage (22).

9. Outil selon l'une des revendications 1 à 8, **caractérisé en ce qu'**il est fabriqué à base d'un matériau dur, comme par exemple à base d'un métal très dur ou d'un matériau cermet.

10. Outil selon la revendication 9, **caractérisé en ce que** les canaux à réfrigérant/lubrifiant (38) dans la partie de serrage (22) sont préformés au moins en partie dans l'ébauche d'outil.

11. Outil selon l'une des revendications 1 à 10, **caractérisé par** la conception sous forme d'outil de perçage ou **caractérisé par** la conception sous forme d'alésoir ou **caractérisé par** la conception sous forme d'outil de fraisage ou **caractérisé par** la conception sous forme d'outil de filetage.

12. Procédé pour l'alimentation des lames d'un outil selon l'une des revendications 1 à 11, avec un réfrigérant et lubrifiant mis sous pression, **caractérisé en ce que** le réfrigérant et lubrifiant est amené par la partie de serrage (22) sous une pression comprise entre 5 et 80 bars, de préférence entre 10 et 70 bars.

13. Procédé selon la revendication 12, **caractérisé en ce que** le réfrigérant et lubrifiant est constitué d'un agent d'écoulement aqueux.

14. Procédé selon la revendication 12, **caractérisé en ce que** le réfrigérant et lubrifiant est constitué d'un fluide gazeux, qui est mélangé avec un fluide lubrifiant.

15. Procédé selon l'une des revendications 12 à 14, **caractérisé en ce que** l'écoulement du réfrigérant et lubrifiant est sollicité dans la partie de serrage (22) par une torsion autour de l'axe d'écoulement.
